(19) Europäisches Patentamt

European Patent Office

Office européen des brevets

(11) EP 2 336 900 A2

(12) **EUROPEAN PATENT APPLICATION**

(43) Date of publication:
**22.06.2011 Bulletin 2011/25**

(51) Int Cl.:
***G06F 17/30*** (2006.01)

(21) Application number: **10168470.2**

(22) Date of filing: **05.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **18.12.2009 JP 2009288265**

(71) Applicant: **Kabushiki Kaisha Toshiba
Tokyo 105-8001 (JP)**

(72) Inventor: **Kasano, Koji
Tokyo 105-8001 (JP)**

(74) Representative: **Schlauch, Michael
Henkel, Feiler & Hänzel
Maximiliansplatz 21
80333 München (DE)**

(54) **Search device and search method**

(57) According to one embodiment, a search device includes a storage module (152), an adder (103), an operation module (101), a relation calculator (104), and a search result output module (106) The storage module (152) stores a plurality of contents and metadata corresponding to each of the contents. The adder (103) adds, when the storage module (152) stores video content, character strings obtained by recognizing a caption contained in the video content to metadata of the video content. The operation module (101) receives operation to select music content from the contents as a search key. The relation calculator (104) calculates relation between the music content and each of contents other than the music content stored in the storage module (152) according to similarity in metadata. The search result output module (106) outputs a search result indicating the contents other than the music content according to the relation.

FIG.6

EP 2 336 900 A2

## Description

FIELD

Embodiments described herein relate generally to a search device and a search method.

BACKGROUND

In recent years, with increased capability of AV equipment for storing contents and improved seamless accessibility of contents between equipment, let alone within the same equipment, or on a network, there has been a proliferation in the number of contents accessible to users. Accordingly, when a user specifies one music content as a search key to retrieve content related to the music content, there is a need for a search device that retrieves content highly related to the music content from numerous contents.

For example, Japanese Patent Application Publication (KOKAI) No. 2008-227881 discloses a conventional search device. The conventional search device compares music information, such as title, composer, and player, on music content specified as a search key (metadata of the music content) with music information related to an insert song of video content (metadata of the video content). Thus, the conventional search device retrieves video content containing an insert song that matches or is similar to the music content.

In the case where an insert song of video content is not described in the metadata of the video content, even if the insert song is related to music content specified as a search key, the conventional search device may not retrieve the video content as highly related content.

It is therefore an object of the invention to provide a search device and a search method capable of retrieving content related to music content specified as a search key with high accuracy.

SUMMARY

To overcome the problems and achieve the object mentioned above, according to an embodiment, a search device comprises a storage module, an adder, an operation module, a relation calculator, and a search result output module. The storage module is configured to store a plurality of contents and metadata corresponding to each of the contents. The adder is configured to add, when the storage module stores video content, character strings obtained by recognizing a caption contained in the video content to metadata of the video content. The operation module is configured to receive operation to select music content from the contents as a search key. The relation calculator is configured to calculate relation between the music content and each of contents other than the music content stored in the storage module according to similarity in metadata. The search result output module is configured to output a search result indicating the contents other than the music content according to the relation.

According to another embodiment, there is provided a search method applied to a search device comprising a storage module configured to store a plurality of contents and metadata corresponding to each of the contents. The search method comprises: an adder adding, when the storage module stores video content, character strings obtained by recognizing a caption contained in the video content to metadata of the video content; an operation module receiving operation to select music content from the contents as a search key; a relation calculator calculating relation between the music content and each of contents other than the music content stored in the storage module according to similarity in metadata; and a search result output module outputting a search result indicating the contents other than the music content according to the relation.

As described above, according to an embodiment, it is possible to retrieve content related to music content specified as a search key with high accuracy.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a display device according to an embodiment;
FIG. 2 is an exemplary schematic diagram of metadata when a television (TV) program is content in the embodiment;
FIG. 3A is an exemplary schematic diagram of display information indicating the details of content in the embodiment;
FIG. 3B is another exemplary schematic diagram of display information indicating the details of content in the embodiment;
FIG. 4A is an exemplary schematic diagram for explaining the operation of displaying the display information in the embodiment;

FIG. 4B is another exemplary schematic diagram for explaining the operation of displaying the display information in the embodiment;

FIG. 5 is still another exemplary schematic diagram for explaining the operation of displaying the display information in the embodiment;

FIG. 6 is still another exemplary schematic diagram for explaining the operation of displaying the display information in the embodiment;

FIG. 7 is still another exemplary schematic diagram for explaining the operation of displaying the display information in the embodiment;

FIG. 8 is still another exemplary schematic diagram for explaining the operation of displaying the display information in the embodiment;

FIG. 9 is an exemplary schematic diagram of list information in which are arranged display information of key content and that of other contents in the embodiment;

FIG. 10 is an exemplary flowchart of the operation of the display device in the embodiment;

FIG. 11 is an exemplary flowchart of the operation of the display device in the embodiment; and

FIG. 12 is an exemplary schematic diagram of display of a search result in the embodiment.

DETAILED DESCRIPTION

Various embodiments will be described hereinafter with reference to the accompanying drawings.

Although a search device of an embodiment is described below as being applied to a display device such as a television (TV), this is by way of example only and is not to be construed to be limiting. The search device may be applied to a personal computer and the like. Briefly, in the following embodiment, when a user retrieves key content as a search key and content related to the key content from a plurality of contents, in response to user selection of key content, the display device displays the key content with contents related to the key content.

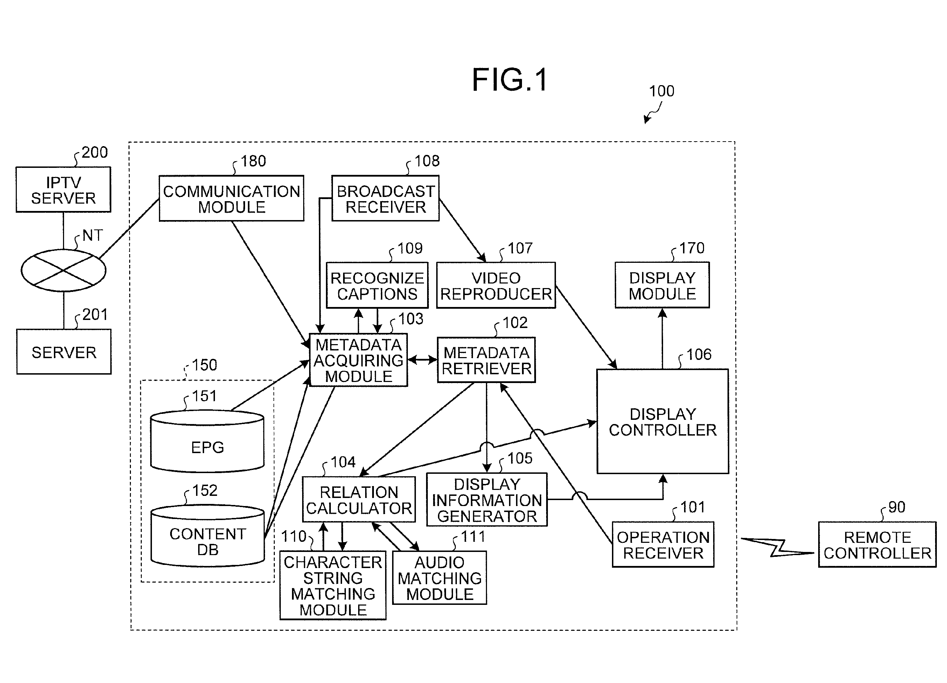

A description will be given of the functional configuration of a display device 100 according to the embodiment. FIG. 1 is a block diagram of the display device 100. As illustrated in FIG. 1, the display device 100 comprises a storage module 150, a display module 170, a broadcast receiver 108, and a communication module 180. The display device 100 is connected to an Internet protocol television (IPTV) server 200 and a server 201 via a communication network NT.

Although not illustrated in the drawings, the display device 100 further comprises a processor, such as an application-specific integrated circuit (ASIC) or a central processing unit (CPU), and a storage device. Examples of the storage device include a read only memory (ROM) that stores a predetermined computer program for controlling the display device 100 and a random access memory (RAM) that provides a work area for the processor. The cooperation of the processor and the computer program stored in the storage device implements functional modules including an operation receiver 101, a metadata retriever 102, a metadata acquiring module 103, a relation calculator 104, a display information generator 105, a display controller 106, a video reproducer 107, a caption recognition module 109, a character string matching module 110, and an audio matching module 111.

The IPTV server 200 provides services to distribute video such as TV programs and movies using IP. In response to a request from the display device 100, the IPTV server 200 delivers thereto content such as video and metadata of the content. The server 201 is a general server that provides Web and email services. In response to a request from the display device 100, the server 201 may deliver thereto content such as video and metadata of the content.

The communication module 180 is an interface that connects the display device 100 to the IPTV server 200 and the server 201 via the communication network NT.

The storage module 150 is a storage medium such as a hard disk drive (HDD) or a memory that stores an electronic program guide (EPG) 151 and a content database (DB) 152. The storage module 150 obtains an electronic program guide (EPG data) from an external server that manages and distributes the electronic program guide. More specifically, the storage module 150 obtains via the communication module 180 the EPG 151 for TV, cable television (CATV), communications satellite (CS) broadcasting, broadcasting satellite (BS) broadcasting, and the like from a service provider server connected through the communication network NT such as the Internet. Thus, the storage module 150 stores the EPG 151. It is assumed herein that the EPG 151 contains information on programs to be broadcasted during a period from the present time to a certain time in the future (e.g., after one week).

The content DB 152 stores content such as video. For example, if the display device 100 is a TV with HDD, the content DB 152 stores video of a recorded TV program as the content. Examples of the content include video in a digital versatile disk (DVD) and video captured by a video camera.

The content DB 152 also stores metadata related to the content in association therewith. The term "metadata" as used herein refers to a set of information indicating unique characteristics of the content. The unique characteristics include the title of the content and the broadcast date and time of the content.

For example, if the content is a TV program, the metadata indicates information (program information) on the TV program such as the title, the channel, the broadcast date and time, the cast, the brief description, and the genre. This metadata is provided to the content DB 152 with the content and stored therein in association with the content.

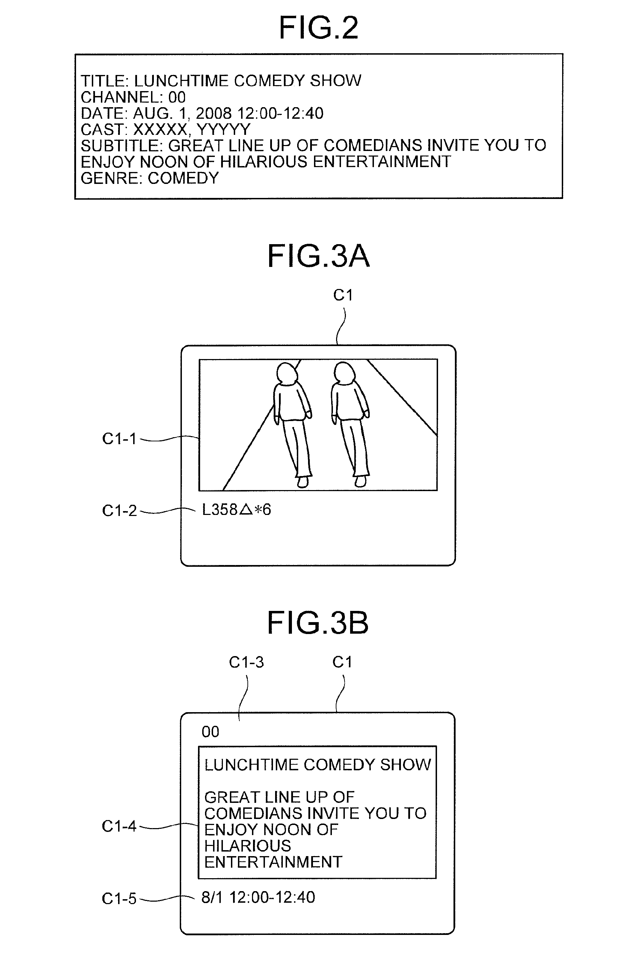

FIG. 2 illustrates the metadata when a TV program is the content. The metadata illustrated in FIG. 2 represents information related to the content of a recorded TV program. The content DB 152 stores as metadata the information, such as the title of the TV program "Lunchtime Comedy Show", the channel "00", the broadcast date and time "August 1, 2008, 12:00 - 12:40", the cast "xxxxx, yyyyy", the subtitle "Great line up of comedians invite you to enjoy a noon of hilarious entertainment", and the genre "comedy".

Although an example is described above in which the metadata is provided as being preset, this is by way of example and not of limitation. The content DB 152 may receive information provided by a user thorough an input device such as a remote controller 90 and store it as metadata in association with the content.

The display module 170 includes, for example, a liquid crystal display (LCD) for displaying text and an image, and displays content of a received TV program, stored content, an electronic program guide, and the like. The display module 170 also displays display information representing the details of content generated by the display information generator 105, which will be described later, to allow a user to retrieve the content (see FIGS. 3A and 3B).

The broadcast receiver 108 receives the content of video (TV program) broadcasted by TV broadcasting and metadata of the content through an antenna or a cable (not illustrated).

The video reproducer 107 acquires the content of video that a user desires to reproduce. Examples of the content include the content of a TV program, etc. received by the broadcast receiver 108, the content of video acquired from the IPTV server 200 through the communication module 180, and the content of video stored in the content DB 152. The video reproducer 107 decodes (reproduces) the content thus acquired, and outputs it to the display controller 106.

The operation receiver 101 receives user's operation. More specifically, when a user pushes a button on the remote controller 90, the operation receiver 101 recognizes the operation and receives an input provided by the operation. For example, when a user retrieves desired content as well as contents related to the desired content from a plurality of contents, the user selects content (key content) as a search key using the remote controller 90 from a plurality of contents displayed on the display module 170. The operation receiver 101 receives this selection of the key content. The key content may be content being reproduced or having been reproduced. In this case, when a user pushes a button on the remote controller 90 while content is being reproduced or upon compression of reproduction of content, the operation receiver 101 receives the user's operation as a selection of the key content, i.e., an instruction to retrieve contents. The operation receiver 101 may receive the selection of content to specify it as key content from list information displayed on the display module 170. The list information indicates pieces of display information of a plurality of contents.

The metadata acquiring module 103 acquires content received by the broadcast receiver 108 or the communication module 180 and the metadata, and stores them in the content DB 152. When the content acquired from the broadcast receiver 108 or the communication module 180 contains video, the metadata acquiring module 103 outputs data related to the video to the caption recognition module 109, and stores the recognition result obtained by the caption recognition module 109 in the content DB 152 with the metadata (the details will be described later). Besides, when the operation receiver 101 receives the selection of key content, the metadata acquiring module 103 acquires meta data of all contents (the key content and other contents than the key content). More specifically, for example, the metadata acquiring module 103 acquires the metadata of the contents from the content DB 152. The metadata acquiring module 103 may request the IPTV server 200 for the metadata of the contents to acquire the metadata. The metadata acquiring module 103 may also acquire the metadata of the contents from the EPG 151.

The metadata retriever 102 retrieves, when the operation receiver 101 receives the selection of the key content, metadata of the key content from the metadata of the contents acquired by the metadata acquiring module 103. The metadata retriever 102 then outputs the metadata of the key content to the relation calculator 104. The metadata retriever 102 also retrieves, based on the metadata of the key content acquired from the metadata acquiring module 103, metadata of other contents to be the objects of calculation by the relation calculator 104 as to the relation to the metadata of the key content. The metadata retriever 102 then outputs the metadata of the other contents to the relation calculator 104.

The metadata retriever 102 also outputs, when the operation receiver 101 receives the selection of the key content, the metadata of all the contents acquired by the metadata acquiring module 103 to the display information generator 105.

The relation calculator 104 calculates the relation of the other contents to the key content based on the metadata of the key content and the metadata of the other contents received from the metadata retriever 102 for each item contained in the metadata. Examples of the item include title and channel. More specifically, the relation calculator 104 calculates relation RM using the following Equation 1:

$$\text{relation RM} = \sum_{n=1}^{N} fa_n(M11(n), M21(n)) \times wa_n \qquad (1)$$

where N represents the total number of metadata items acquirable by the metadata acquiring module 103, M11 represents the metadata of the key content, M21 represents the metadata of any of the other contents, and (n) represents n-th metadata acquired by the metadata acquiring module 103. Further, $fa_n$(M11(n), M21(n)) is a function that returns the relation between metadata M11 (n) and M21 (n) as $RM_n$, and $Wa_n$ is a value (n = 1, ..., N) indicating weight.

As described above, although various types of information is acquired as the metadata, the metadata will be described below as including a set of five items (N = 5), i.e. , recoding date and time, title of content, channel, genre, and cast, for simplicity. The five items of the metadata will be described as n = 1, 2, ... , 5 in the above order.

The relation RM of the other contents with respect to the key content can be represented by the weighted linear sum of the following five relations $RM_1$ to $RM_5$:

$RM_1 = fa_1$ (recoding date and time of metadata M11, recoding date and time of metadata M21)
$RM_2 = fa_2$ (title of metadata M11, title of metadata M21)
$RM_3 = fa_3$ (channel of metadata M11, channel of metadata M21)
$RM_4 = fa_4$ (genre of metadata M11, genre of metadata M21)
$RM_s = fa_5$ (cast of metadata M11, cast of metadata M21)

For example, $fa_1$ is a function that is larger for a smaller difference in recoding date and time between the metadata M11 and m21 and is smaller for a larger difference in the recoding date and time. More specifically, $fa_1$ may be represented by using a relational expression as follows:

$$MO1/|rec\_data\ (M11) - rec\_data\ (M21)|$$

where rec_data (x) is a function that uniquely converts recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as g(x) = MO1/|X| is applied to $fa_1$ (M11, M21) = g(rec_data (M11) - rec_data (M21)), it is not so limited. The function g may be a function with L2 norm as, for example, g(x) = M01/ || x ||. In this case, || x || is the square root of the sum of squares of the differences between elements that constitute x.

Other functions such as a sigmoid function and a gamma function may be applied to g(x). Besides, while an example is described above in which the function is larger as the recoding dates and times of the metadata M11 and M21 are closer, it is not so limited. The function may be smaller as the recoding dates and times of the metadata M11 and M21 are closer. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", two letters "CD" are contained in both the titles. If the title of the metadata M11 is "ABCDE" and that of the metadata M11 is "FGHIE", one letter is contained in both the titles. Therefore, the value of $fa_2$ is larger in the former case. The relation may be determined based on a keyword contained in the brief description of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE #2" and "ABCDE #3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value M02 when the metadata M11 and M21 are of contents of the same channel and otherwise takes value 0. The value M02 is an arbitrary constant number. In addition, if the metadata M11 and M21. are of contents of affiliate channels, the value of $fa_3$ may be set to a different value. For example, $fa_3$

may be a function that returns value MO2/2 when the metadata M11 and M21 are of contents of affiliate channels. Further, $fa_3$ may be a function that returns value M02/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value M03 if the metadata M11 and M21. both belong to the same genre "sports" and otherwise takes value 0. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value M03/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value M03/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value 2xMO4 (M04: an arbitrary constant number) , and it may be a function that takes value 0 if there is no same person casted for both the contents. Besides, someone in the cast may be a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value M04/2.

In a similar fashion, the relation between groups or between people featured in the contents may be defined. For example, when the groups XX and YY belong to the same office or agency, $fa_5$ may be a function that returns value M04/4. In this case, the relation between a person and a group or between a person, a group, and an office may be defined in the metadata or may be obtained from an external server (information site).

While an example is described above in which the relation is calculated not differentiating people in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, if the second person on the cast list for the metadata M11 is the third person on the cast list for the metadata M21, the relation may be weighted by 1/2 with respect to the second person for the metadata M11 and may further be weighted by 1/3 with respect to the third person for the metadata M21. That is, the relation may be weighted by 1/2x1/3 = 1/6. Besides, the relation may be weighted differently with respect to a star playing a leading role based on information on the cast or the like. For example, the derived relation may be double-weighted with respect to the star.

With the above calculation of the relation RM, based on the title and the name of, for example, player, composer, lyric writer, and label, content with more of the same title and names as key content may be assigned higher relation. Using keywords obtained by dividing genre, lyric, title, or the like into words, content with more of the same keywords as key content may be assigned higher relation. Further, based on the range or the register, content with the highest key, the lowest key, and the average key similar to those of key content may be assigned higher relation. Still further, based on the date and time, and the place, content with the date and time, and the place similar to those of key content may be assigned higher relation.

The relation calculator 104 calculates the relation of the other contents to the key content based also on matching results obtained by the character string matching module 110 and the audio matching module 111.

The display information generator 105 generates display information representing the details of the key content and the other contents based on the metadata of the key content and that of the other contents output from the metadata retriever 102. More specifically, for example, based on the metadata of content of video data stored in the content DB 152, the display information generator 105 adds such items as a title to the representative image of the video data to generate display information to be displayed on the display module 170. Further, for example, based on the metadata of content of video data obtained from the IPTV server 200, the display information generator 105 adds such items as a title to the representative image of the video data to generate display information to be displayed on the display module 170. Still further, for example, based on the EPG 151, the display information generator 105 generates display information to be displayed on the display module 170 to indicate the title of a TV program, the broadcast date and time, the channel, the brief description of the TV program, and the like.

The display information will now be described in detail. FIGS. 3A and 3B illustrate examples of the display information representing the details of content. FIG. 3A illustrates display information C1 of the key content generated based on, for example, the metadata of video data stored in the content DB 152. As illustrated in FIG. 3A, the display information C1 includes a representative image C1-1 of the content and title C1-2 "L358Δ*6" of the content (video). On the other hand, FIG. 3B illustrates the display information C1 of the key content generated based on, for example, the EPG 151. As illustrated in FIG. 3B, the display information C1 includes the channel C1-3, title C1-4 "Lunchtime Comedy Show" with brief description "Great line up of comedians invite you to enjoy a noon of hilarious entertainment" of the content (video), and broadcast date and time C1-5.

The display controller 106 reproduces and displays content output from the video reproducer 107 on the display module 170.

As described above, when the operation receiver 101 receives an instruction from a user to retrieve content, the display controller 106 displays list information indicating a list of display information of key content and that of other contents related to the key content on the display module 170 to allow the user to retrieve the content.

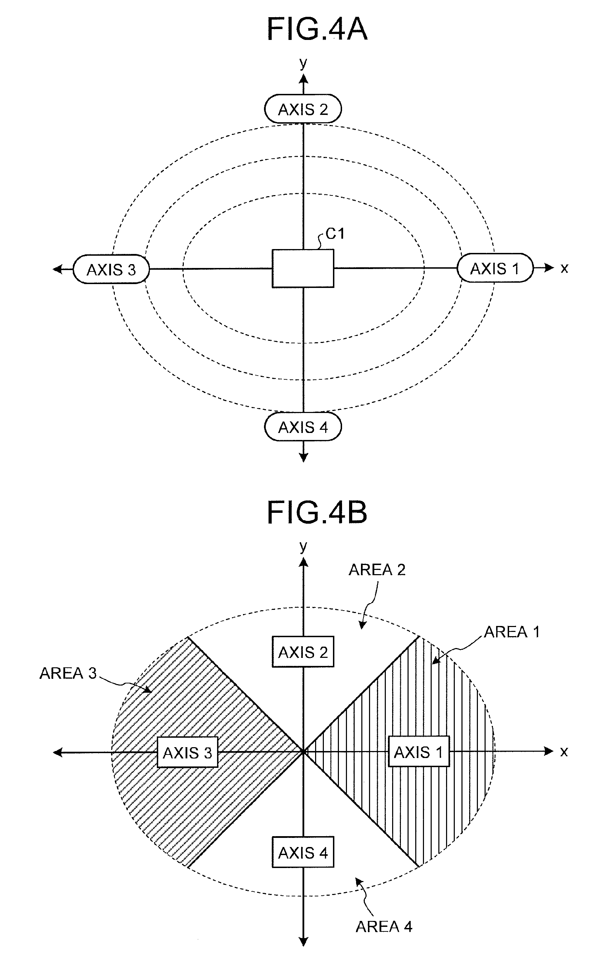

In the list information, the display information of the key content is arranged in a desired position. With the position of the display information of the key content as the center, pieces of the display information of the other contents are arranged to form concentric polygons, for example, correspondingly to the directions of operation on an operation button of the remote controller 90 such as an arrow key. The screen is divided into predetermined areas for respective items in radial directions from the center. The pieces of the display information of the other contents are arranged in the predetermined areas such that the one with higher relation is closer to the center. Additionally, in the list information, the display information of the key content is displayed in the largest size, and the display information of the other contents is displayed smaller as the distance from the center increases. A description will be given of the operation of displaying the display information. FIGS. 4A to 8 are schematic diagrams for explaining the operation of displaying the display information.

As illustrated in FIG. 4A, the display controller 106 arranges display information C1 of the key content at a desired position. The display controller 106 then sets, using the position of the display information C1 as the center, four axes (axes 1 to 4) in the positive x-axis direction, the positive y-axis direction, the negative x-axis direction, and the negative y-axis direction, respectively. Thereafter, the display controller 106 assigns each item contained in the metadata of the selected key content to one of the four axes. Referring to FIG. 2, for example, as items contained in the metadata, the "title" of a TV program (content), the "cast" of the TV program, a "keyword" for search contained in the brief description of the TV program, and the "genre" of the TV program are each assigned to one of the four axes. A user can use the items assigned to the axes as indices for searching for contents related to the key content.

As illustrated in FIG. 4B, the display controller 106 divides the display area into predetermined areas (areas 1 to 4) in radial directions from the display information C1 in the center. The display area is divided at an arbitrary angle, for example, an angle of 90°, such that each of the predetermined areas includes one of the axes assigned one of the items. In this manner, the display controller 106 generates the predetermined areas (area 1 to 4) each including one of the axes.

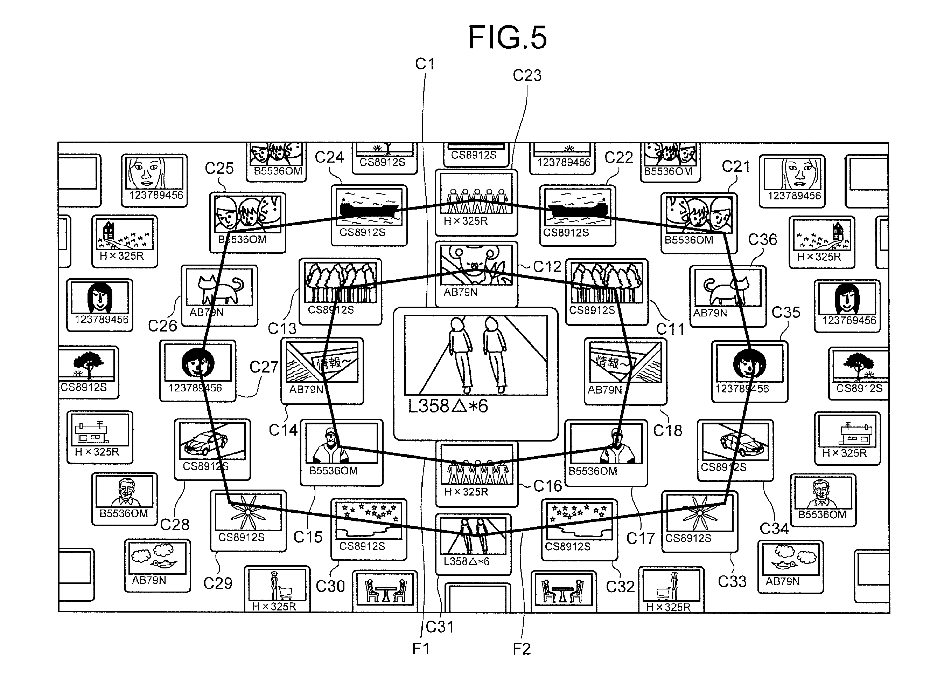

As illustrated in FIG. 5, the display controller 106 arranges pieces of display information of other contents on a plurality of octagons F1, F2, ..., which are concentrically formed around the display information C1 of the key content as the center, correspondingly to up, down, left, and right directions of the operation button on the remote controller 90. More specifically, the display controller 106 arranges eight pieces of display information C11 to C18 of other contents on the corners of the octagon F1. Further, the display controller 106 arranges on the corners of the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of operation. In the same manner as just described, the display controller 106 arranges on the corners of each octagon eight pieces of display information of other contents, and also eight pieces of display information of other contents between the respective pieces. With this arrangement of display information of other contents, with respect to any piece of display information, other pieces of display information are arranged along the up, down, left, or right directions of operation.

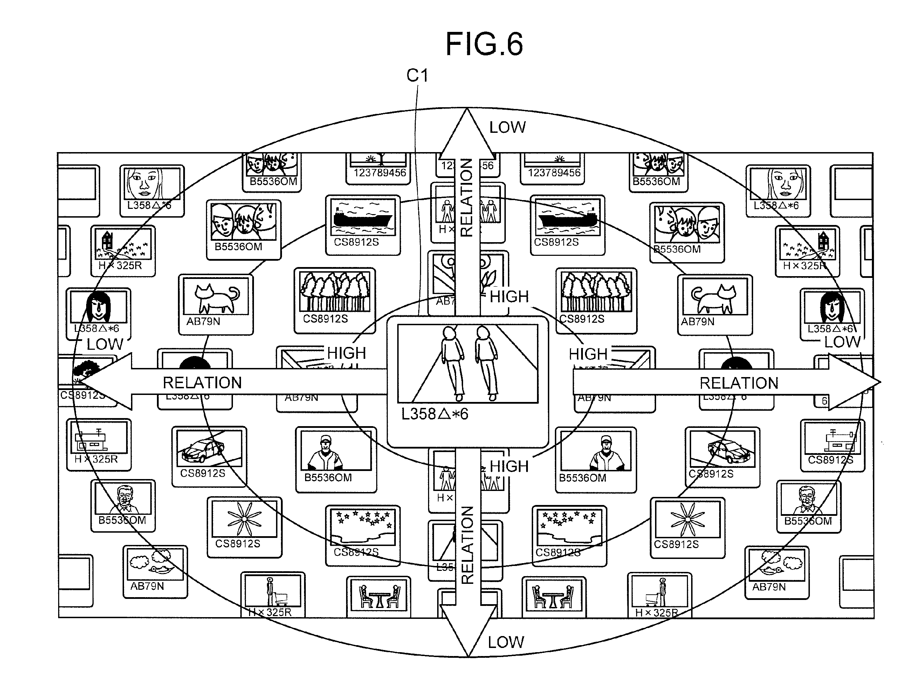

At this time, as illustrated in FIG. 6, the display controller 1.06 arranges pieces of display information of other contents with higher relation to the key content closer to the center at which is arranged the display information C1 of the key content. In other words, pieces of display information of other contents with lower relation to the key content are arranged more distant from the center. That is, in the example of FIG. 5, the display controller 106 arranges pieces of display information of other contents with the highest relation to the key content on the octagon F1. The display controller 106 also arranges pieces of display information of other contents on the octagon F2 and other octagons (not illustrated) in descending order of relation to the key content.

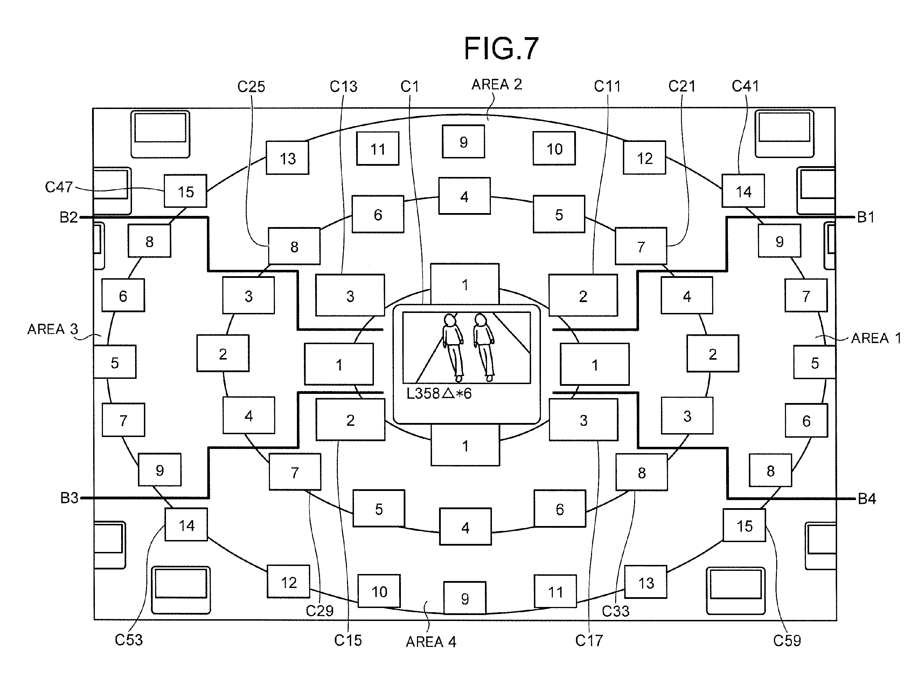

In addition, the display controller 106 arranges pieces of display information of other contents in each of the predetermined areas previously obtained for each item in descending order of relation to the key content. That is, the display controller 106 classifies the display information of other contents by the items assigned to the areas (axes), respectively. More specifically, as illustrated in FIG. 7, for respective items assigned to the area 1 defined by boundary lines B1 and B4, the area 2 defined by boundary lines B1 and B2, the area 3 defined by boundary lines B2 and B3, and the area 4 defined by boundary lines B3 and B4, the display controller 106 arranges pieces of display information of other contents in the order of numbers assigned to the pieces in FIG. 7. Thus, with respect to each of the items, the pieces of the display information of the other contents can be arranged from around the center in descending order of relation to the key content.

In the example of FIG. 7, pieces of the display information C11, C21 and C41 are located in positions capable of belonging to both the areas 1 and 2. For example, the pieces of the display information C11, C21 and C41 may be set to belong to either one of the areas or items in which more contents with relation to the key content higher than a predetermined threshold are present than in the other. In FIG. 7, since more other contents with relation higher than the predetermined threshold are present in the area 2 than in the area 1, the pieces of the display information C11, C21 and C41 belong to the area 2. The same is applied to pieces of the display information C13, C25, C47, C15, C29, C53, C17, C33, and C59.

While an area to which display information displayed near a boundary line belongs is described above as being determined based on the degree of relation to the key content, this is by way of example and not of limitation. For example, display information displayed near a boundary line may belong to an area having more contents related to the key content than the other.

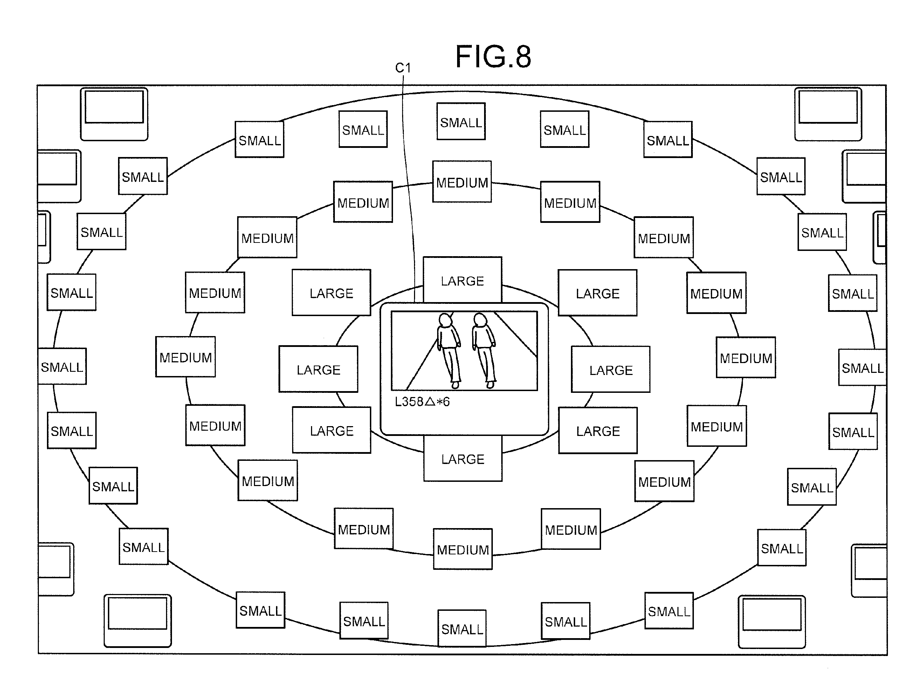

Further, as illustrated in FIG. 8, the display controller 106 displays the display information of the key content in the largest size, and the display information of the other contents smaller as the distance from the center increases. When display information of another content than the key content belongs to a plurality of areas, the display controller 106 displays the display information in one of the areas so that the same display information is not displayed concurrently in the different areas. More specifically, when display information of the other content belongs to the areas 1 and 2, the display information is displayed in only one area assigned an item with respect to which the other content has higher relation to the key content.

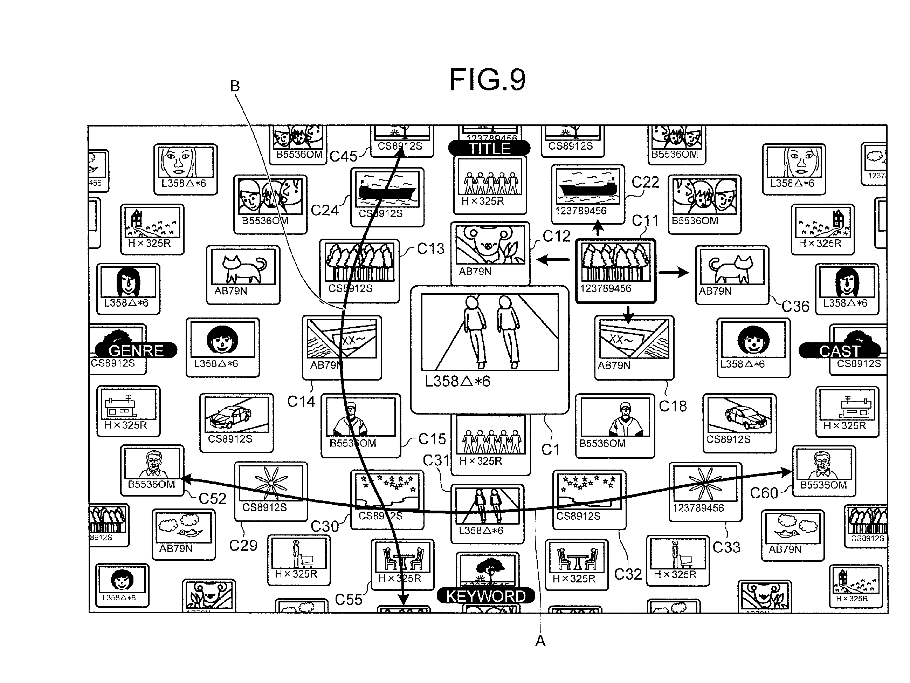

In this manner, the display controller 106 generates list information in which are arranged the display information C1 of the key content and the display information C11, ... of the other contents, and displays the list information on the display module 170. Incidentally, the display controller 106 stores in advance the display position and size of the display information, and, after the calculation of the relation to the key content, sequentially arranges pieces of the display information of the other contents each in a predetermined size. FIG. 9 illustrates an example of the list information in which are arranged the display information C1 of the key content and the display information C11, ... of the other contents. In the list information of FIG. 9, items "Title", "Cast", "Keyword", and "Genre" are displayed on the upside, right side, downside, and left side of the screen, respectively. Further, with the display information C1 of the key content as the center, pieces of the display information of the other contents are arranged from around the center toward the outside.

As described above, according to the embodiment, pieces of display information of other contents than key content are arranged along up, down, left, and right directions of operation. Therefore, in the example of FIG. 9, if the display information C30 is focused content for search, upon receipt of an instruction for left-right movement through the operation button on the remote controller 90, the focus on the display information C30 moves in directions indicated by a double-head arrow A. Similarly, if the display information C30 is focused content for search, upon receipt of an instruction for up-down movement through the operation button, the focus on the display information C30 moves in directions indicated by a double-head arrow B. Additionally, for example, if the cursor moves one space to the right in response to an instruction when the focus is on the display information C11, the focus moves to the display information C36. Similarly, if the cursor moves one space in the up, left, or down direction in response to an instruction, the focus moves from the display information C11 to the display information C22, C12, or C18. Thus, the operation using the operation button such as an arrow key on the remote controller 90 can be facilitated.

The focused content changed as above may be specified as key content. In this case, with respect to the changed focused content specified as new key content, the relation of other contents is calculated again. The display module 170 displays list information in which are arranged display information of the new key content and that of the other contents.

When the content acquired from the broadcast receiver 108 or the communication module 180 contains video, the caption recognition module 109 recognizes captions or subtitles in the video based on the data related to the video output from the metadata acquiring module 103 to convert it into a character string. The caption recognition module 109 outputs the conversion result to the metadata acquiring module 103. The term "caption" as used herein refers to text in an image, and image recognition is required to extract a caption from the image. A caption in an image may be recognized thorough a conventional technology disclosed in Japanese Patent No. 3692018. Subtitles correspond to text data contained in a video signal related to video, and can be obtained as character string data separately from video data. Generally, the caption includes open caption and closed caption, and subtitles are called closed captions. Hereinafter, text such as captions and subtitles will be referred to as "caption", and the caption includes subtitles and the like. The caption recognition module 109 may output text data containing a character string converted from a recognized caption to the metadata acquiring module 103. Besides, because the character string converted from a recognized caption is a sentence, the caption recognition module 109 may divide the sentence into wards by morphological analysis, and output the result to the metadata acquiring module 103. Upon outputting the result to the metadata acquiring module 103, the caption recognition module 109 may output a frequently-appearing word as a keyword.

The character string matching module 110 matches character strings contained in the metadata of the key content and those contained in the metadata of another content when the relation calculator 104 calculates the relation. The character string matching module 110 outputs the number of matching character strings to the relation calculator 104. The relation calculator 104 assigns higher relation to content with more matching character strings.

For example, if key content is music content such as "karaoke" content and another content is video content, the character string matching module 110 matches character strings contained in the metadata of the music content, such as title, player, lyrics, etc., and character strings converted from recognized captions contained in the metadata of the video content. When the captions of the video content include the title, player, lyrics, and the like of an insert song, and if they match those of the music content, the relation calculator 104 assigns high relation to the video content according to the number of matching character strings.

If key content is music content such as "karaoke" content and another content is product content such as a music compact disk (CD), the character string matching module 110 matches character strings contained in the metadata of the music content, such as title, player, lyrics, etc., and the title of the music CD, player, etc. contained in the metadata of the product content. When the title of the music CD, player, etc. match those of the music content, the relation calculator 104 assigns high relation to the product content according to the number of matching character strings.

On the other hand, if key content is video content and another content is product content such as a music CD, the character string matching module 110 matches character strings converted from recognized captions contained in the metadata of the video content and the title of the music CD, player, etc. contained in the metadata of the product content. When the captions of the video content include the title, player, etc. of an insert song, and if they match those of the music CD, the relation calculator 104 assigns high relation to the product content according to the number of matching character strings.

When the relation calculator 104 calculates the relation between key content and another content both containing audio data, the audio matching module 111 matches the audio data of key content and that of the other content. The audio matching module 111 outputs the length of a section where the sounds match to the relation calculator 104. The relation calculator 104 assigns higher relation to content with a longer sound matching section based on the audio data of key content and that of the other content. The audio data matching may be performed thorough a conventional technology disclosed in Japanese Patent Application Publication (KOKAI) No. 2009-186944.

For example, if key content is music content such as "karaoke" content and another content is video content containing audio or sound, the audio matching module 111 matches the sound of the music content and that of the video content. When the sound of the video content includes a section that matches the sound of the music content, i.e., if the music content is used as an insert song or the like of the video content, the relation calculator 104 assigns high relation to the video content according to the length of the section used for the insert song.

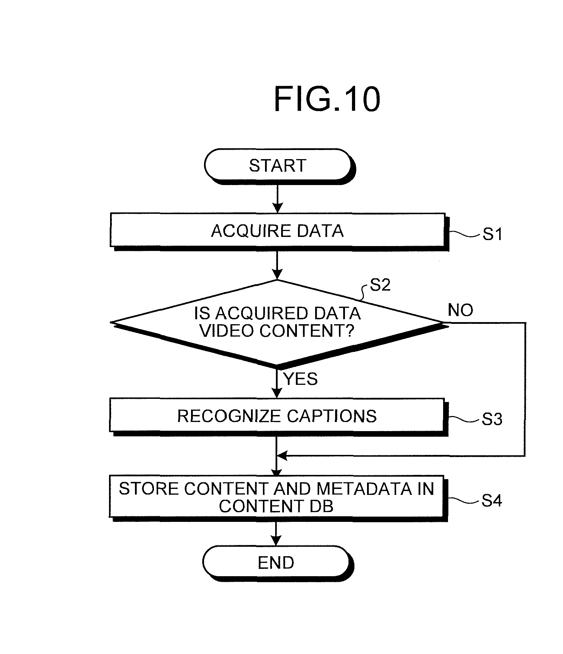

A description will now be given of the process of acquiring content and the metadata performed by the display device 100. FIG. 10 is a flowchart of the process of acquiring content and the metadata performed by the display device 100.

First, the metadata acquiring module 103 acquires content received by the broadcast receiver 108 or the communication module 180 and the metadata (S1). The metadata acquiring module 103 then determines whether the content is video content containing video (S2). At S2, the metadata acquiring module 103 may make the determination by analyzing a data file related to the acquired content to determine whether the data file contains a video image such as a still image and a moving image or based on the extension of the data file indicating the type thereof.

When the acquired content is video content (Yes at S2), the metadata acquiring module 103 outputs data related to the video to the caption recognition module 109. The caption recognition module 109 recognizes captions contained in the video, and outputs the caption recognition result to the metadata acquiring module 103 (S3). Thereafter, the metadata acquiring module 103 adds the caption recognition result to the metadata acquired with the content, and stores the content and the metadata in the content DB 152 (S4).

When the acquired content is content containing no video (No at S2), the metadata acquiring module 103 stores the content acquired from the broadcast receiver 108 or the communication module 180 and the metadata in the content DB 152 (S4).

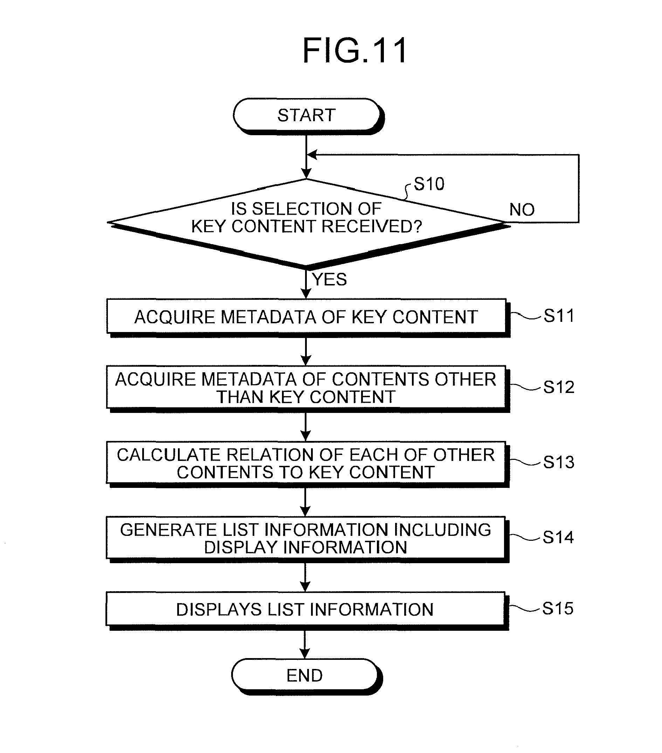

A description will be given of the process of displaying display information performed by the display device 100. FIG. 11 is a flowchart of the process of displaying the display information performed by the display device 100.

The operation receiver 101 waits for receiving the selection of key content thorough the operation button of the remote controller 90 (S10). Upon receipt of the selection of key content (Yes at S10), the metadata acquiring module 103 acquires metadata of the selected key content (S11). The metadata acquiring module 103 then acquires metadata of contents other than the key content (S12).

The relation calculator 104 calculates the relation of the other contents to the key content with respect to each item contained in the metadata (S13). If both the key content and the other contents contain audio data, the audio matching module 111 matches the audio data of the key content and that of the other contents. The relation calculator 104 calculate the relation according to a section where the sounds match. The display controller 106 generates list information indicating display information of the key content and that of the other contents such that pieces of the display information of the other contents are arranged according to their relation to the key content (S14). The display controller 106 then displays the list information on the display module 170 (S15).

Thus, the display module 170 displays list information, in which, with the position of the display information of the key content, i.e., a search key, as the center, the pieces of the display information of the other contents are arranged to form concentric polygons correspondingly to the directions of operation on the operation button. The pieces of the display information of the other contents are arranged from around the center in descending order of relation to the key content.

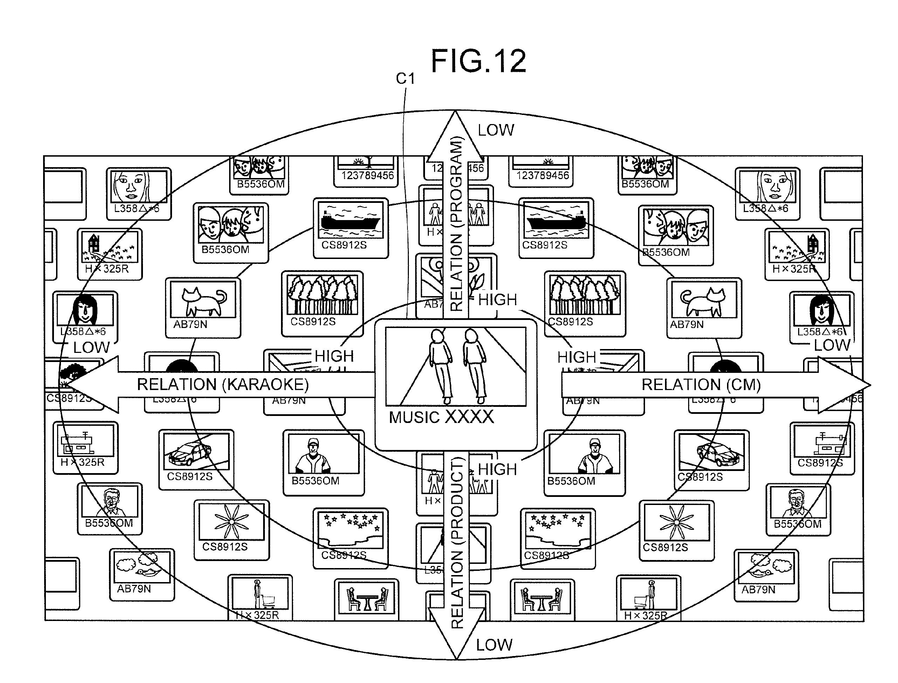

FIG. 12 illustrates an example of display of a search result. More specifically, FIG. 12 illustrates an example of display of a search result in which pieces of display information of other contents are arranged around display information of music content "music xxxx" as key content. As illustrated in FIG. 12, when key content is music content "music xxxx", pieces of display information of contents with higher relation to the key content are arranged closer to the display information C1 of the music content "music xxxx" at the center.

For example, when content is video content, the relation is calculated not only from the metadata delivered with the video content but also from character strings obtained by recognizing captions contained in the video. If the title, player, lyrics, and the like of an insert song contained in the captions match the metadata of the music content "music xxxx", display information of the content is displayed close to the center as being of highly related content. Meanwhile, when content contains audio data, the relation is calculated not only from the metadata delivered with the content but also from a section of the content where the sound matches that of the music content "music xxxx". Accordingly, if the content contains the music content "music xxxx" as an insert song, display information of the content is displayed close to the center as being of highly related content.

With this, when key content is music content, the user can easily retrieve highly related content from numerous contents using the remote controller 90 based not only on metadata delivered with content but also on text information contained in video captions and audio matching results.

As described above, according to the embodiment, the display device 100 stores in the content DB 152 a plurality of contents and metadata corresponding to each of the contents. When content stored in the content DB 152 is video content, the caption recognition module 109 recognizes captions contained in the video content to obtain a character string. The metadata acquiring module 103 adds the character string to the metadata of the video content. Besides, the display device 100 receives the selection of music content as key content from the contents stored in the content DB 152 through the operation receiver 101. The relation calculator 104 calculates the relation between the key content and each of the other contents stored in the content DB 152 according to the similarity between the metadata of the key content and that of the other content. The display controller 106 outputs to the display module 170 a search result indicating the other contents in the order of the relation calculated by the relation calculator 104.

In this manner, when content is video content, a character string is obtained by recognizing captions contained in the video content and is added to the metadata of the video content. Thus, it is possible to retrieve content related to music content specified as a search key with high accuracy. For example, even if an insert song of the video content is not described in the metadata of the video content, if the insert song is related to the music content specified as a search key, the video content is retrieved as highly related content.

The computer program may be executed on a computer to realize the same function as the display device 100. The computer program may be provided to the computer as being stored in advance in ROM or the like. The computer program may also be provided as being stored in a computer-readable storage medium, such as a compact disc-read only memory (CD-ROM), a flexible disk (FD), a compact disc recordable (CD-R), and a digital versatile disc (DVD), as a file in an installable or executable format.

The computer program may also be stored in a computer connected via a network such as the Internet so that it can be downloaded therefrom via the network. The computer program may also be provide or distributed via a network such as the Internet.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A search device comprising:

   a storage module (152) configured to store a plurality of contents and metadata corresponding to each of the contents;
   an adder (103) configured to add, when the storage module (152) stores video content, character strings obtained by recognizing a caption contained in the video content to metadata of the video content;
   an operation module (101) configured to receive operation to select music content from the contents as a search key;
   a relation calculator (104) configured to calculate relation between the music content and each of contents other than the music content stored in the storage module (152) according to similarity in metadata; and
   a search result output module (106) configured to output a search result indicating the contents other than the music content according to the relation.

2. The search device of Claim 1, wherein the relation calculator (104) is configured to calculate the relation between the music content and the video content by comparing the character strings contained in the metadata of the video content with character strings contained in metadata of the music content such that the relation is higher as more character strings match between the music content and the video content.

3. The search device of Claim 1 or 2, further comprising a matching module (111) configured to check sound matching between the music content and content containing sound, wherein
   the relation calculator (104) is configured to calculate the relation according to similarity in sound between the music content and the content containing sound.

4. The search device of any one of Claims 1 to 3, wherein the relation calculator (104) is configured to calculate the relation between the music content and content containing sound such that the relation is higher as the sound contained in the content matches sound of the music content in a longer section.

5. The search device of any one of Claims 1 to 4, wherein
   the relation calculator (104) is configured to calculate the relation with respect to each of items set in advance, and
   the search result output module (106) is configured to output a display screen that is radially divided from a center into predetermined areas each corresponding to one of the items, in which display information of the music content is arranged at the center and display information of each of the contents other than the music content is arranged in corresponding one of the predetermined areas according to the relation.

6. A search method applied to a search device comprising a storage module configured to store a plurality of contents and metadata corresponding to each of the contents, the search method comprising:

   an adder adding, when the storage module stores video content, character strings obtained by recognizing a caption contained in the video content to metadata of the video content;
   an operation module receiving operation to select music content from the contents as a search key;
   a relation calculator calculating relation between the music content and each of contents other than the music content stored in the storage module according to similarity in metadata; and
   a search result output module outputting a search result indicating the contents other than the music content according to the relation.

# FIG.1

## FIG.2

```
TITLE: LUNCHTIME COMEDY SHOW
CHANNEL: 00
DATE: AUG. 1, 2008 12:00-12:40
CAST: XXXXX, YYYYY
SUBTITLE: GREAT LINE UP OF COMEDIANS INVITE YOU TO
ENJOY NOON OF HILARIOUS ENTERTAINMENT
GENRE: COMEDY
```

## FIG.3A

C1

C1-1

C1-2 — L358△*6

## FIG.3B

C1-3    C1

00

LUNCHTIME COMEDY SHOW

GREAT LINE UP OF
COMEDIANS INVITE YOU TO
C1-4 — ENJOY NOON OF
HILARIOUS
ENTERTAINMENT

C1-5 — 8/1 12:00-12:40

# FIG.4A

# FIG.4B

# FIG.5

EP 2 336 900 A2

FIG.6

FIG.7

L358△*6

# FIG.8

# FIG.9

# FIG.10

START

ACQUIRE DATA — S1

IS ACQUIRED DATA VIDEO CONTENT? — S2    NO

YES

RECOGNIZE CAPTIONS — S3

STORE CONTENT AND METADATA IN CONTENT DB — S4

END

# FIG.11

START

S10

IS SELECTION OF
KEY CONTENT RECEIVED?          NO

YES

ACQUIRE METADATA OF KEY CONTENT          S11

ACQUIRE METADATA OF CONTENTS OTHER
THAN KEY CONTENT          S12

CALCULATE RELATION OF EACH OF OTHER
CONTENTS TO KEY CONTENT          S13

GENERATE LIST INFORMATION INCLUDING
DISPLAY INFORMATION          S14

DISPLAYS LIST INFORMATION          S15

END

# FIG.12

C1

RELATION (PROGRAM)

LOW

HIGH

RELATION (KARAOKE)

LOW

HIGH

MUSIC XXXX

HIGH

RELATION (CM)

LOW

HIGH

RELATION (PRODUCT)

LOW

**REFERENCES CITED IN THE DESCRIPTION**

**Patent documents cited in the description**

- JP 2008227881 A
- JP 3692018 B
- JP 2009186944 A